# EUROPÄISCHE PATENTSCHRIFT

(11) **EP 3 883 193 B1**
(45) Veröffentlichungstag und Bekanntmachung des Hinweises auf die Patenterteilung: **03.09.2025**
(21) Anmeldenummer: 21162687.4
(22) Anmeldetag: 15.03.2021
(51) Int. Cl.: H04L 12/40, H04L 12/46

(54) **BUS-SYSTEM, INSBESONDERE FÜR FAHRRDÄDER**
BUS SYSTEM, ESPECIALLY FOR BICYCLES
SYSTÈME DE BUS, EN PARTICULIER POUR LES BICYCLETTES

(30) Priorität: 16.03.2020 DE 102020107147
(43) Veröffentlichungstag der Anmeldung: 22.09.2021
(73) Patentinhaber: Holger, Fürstenberger, 76135 Karlsruhe (DE)
(72) Erfinder: Holger, Fürstenberger, 76135 Karlsruhe (DE)
(74) Vertreter: Christ, Niko

(56) Entgegenhaltungen:
- WO-A1-2019/103696
- US-A1- 2010 077 404
- ZILLNER TOBIAS: "Magdeburger Journal zur Sicherheitsforschung Gegründet 2011 | ISSN: 2192-4260 Herausgegeben von ZigBee Exploited", RETRIEVED SEPTEMBER MAGDEBURGER JOURNAL ZUR SICHERHEITSFORSCHUNG // AUSGABE BAND, 2 September 2016 (2016-09-02), pages 699 - 704, XP055822189, Retrieved from the Internet <URL:http://www.sicherheitsforschung-magdeburg.de/uploads/journal/MJS_045_Zillner_ZigBee.pdf> [retrieved on 20210707]

## Beschreibung

Die Erfindung betrifft ein BUS-System für Straßenverkehrsteilnehmer und im Straßenverkehr bewegte Vehikel, insbesondere für Fahrräder, umfassend ein drahtgebundenes Netzwerk sowie ein mit dem drahtgebundenen Netzwerk verbundenes, drahtloses Netzwerk.

Aus dem Stand der Technik sind drahtgebundene als auch drahtlose Netzwerke sowie Kombinationen aus drahtgebundenen mit drahtlosen Netzwerken durchaus bekannt. Ein solches vorbekanntes drahtgebundenes Netzwerk ist etwa der CAN-BUS, welcher häufig im Automobilbereich eingesetzt wird. Die Kombination dieses drahtgebundenen Netzwerks mit einem drahtlosen Netzwerk, z.B. Bluetooth, ist ebenfalls aus dem Stand der Technik vorbekannt.

Derartige Kombinationen von drahtgebundenen Netzwerken mit drahtlosen Netzwerken finden sich durchaus in unterschiedlichen Bereichen, wie in der bereits erwähnten Automobilbranche sowie auch in Verbindung mit so genannten "Smart-Home-Systemen".

Beispielsweise offenbart die DE 10 2013 224 740 A1 eine Kommunikationseinrichtung die eine verbesserte Kommunikation eines mobilen Endgerätes sowohl mit einer stationären Basisstation als auch mit dem Fahrzeug Bordnetz ermöglicht. Die Kommunikationseinrichtung zeichnet sich dadurch aus, dass diese eine erste Schnittstelle zur Herstellung einer ersten Funkverbindung mit mindestens einer stationären Basisstation und eine zweite Schnittstelle zur Herstellung einer zweiten Funkverbindung mit mindestens einem mobilen Endgerät, umfasst, wobei die Kommunikationseinrichtung eine dritte Schnittstelle zur Verbindung und Datenübertragung mit mindestens einer Komponente, insbesondere einer elektronischen Steuereinheit, eines Fahrzeug Bordnetzes aufweist.

Ferner ist aus der internationalen Patentanmeldung WO 2019/043446 A1 ein Verfahren und eine Vorrichtung zur Sammlung und Nutzung von Sensordaten eines Fahrzeuges offenbart. Bei diesem wird eine Verkehrsgefährdung, wie z. B. eine Verkehrskollision, eine Verletzung der Verkehrsregeln, eine Beschädigung der Fahrbahnoberfläche oder ein anderes Verkehrshindernis, von einem Sensor in einem Fahrzeug erkannt. Die Sensordaten werden in regelmäßigen Abständen oder bei Erkennung der Anomalie über ein erstes drahtloses Netzwerk an einen Server über das Internet gesendet, zusammen mit einer Fahrzeugkennung (Fahrzeugidentifikationsnummer (VIN) oder das Kennzeichen) und seinem GNSS- oder GPS-Standort. Der Server analysiert die Sensordaten und sendet daraufhin über ein drahtloses Netzwerk über das Internet eine Benachrichtigung an ein Client-Gerät, wie z. B. ein Smartphone, oder an eine Gruppe von Fahrzeugen, die sich in der Nähe des ersten Fahrzeugs befinden. Die empfangene Nachricht kann von jedem der Fahrzeuge in der Gruppe verwendet werden, um einen Aktuatorbetrieb zu steuern, zu begrenzen, zu aktivieren oder anderweitig zu beeinflussen, oder sie kann verwendet werden, um den Fahrer über eine Armaturenbrettanzeige zu benachrichtigen.

Weiterhin ist aus der US 2013/0078945 A1 ein System und ein Verfahren vorbekannt, mit dem ein oder mehrere Fahrzeugkommunikationssysteme, die mit einem oder mehreren Fahrzeugen verbunden sind, aktiviert werden können. Das eine oder die mehreren Fahrzeuge können z. B. ein Gateway-Fahrzeug umfassen. Es kann eine Backhaul-Verbindung zwischen einem Fahrzeugkommunikationssystem, das dem Gateway-Fahrzeug zugeordnet ist, und einer zellularen Infrastruktur hergestellt werden. Signale von der zellularen Infrastruktur können an dem Gateway-Fahrzeug zugeordneten Fahrzeugkommunikationssystem empfangen werden. Mit Hilfe des Fahrzeugkommunikationssystems, das dem Gateway-Fahrzeug zugeordnet ist, können die von der zellularen Infrastruktur empfangenen Signale übertragen werden. Signale von einem oder mehreren mobilen Geräten können über das dem Gateway-Fahrzeug zugeordnete Fahrzeugkommunikationssystem empfangen werden. Auch können die von dem einen oder mehreren mobilen Geräten empfangenen Signale über das dem Gateway-Fahrzeug zugeordnete Fahrzeugkommunikationssystem an die zellulare Infrastruktur übertragen werden.

Auch ist aus der DE 10 2014 216 966 A1 ein Fahrrad-Service-System vorbekannt, dass eine an einem Fahrrad angeordnete Sende- und Empfangseinrichtung umfasst. Diese Sende- und Empfangseinrichtung kommuniziert über mobile Datenübertragung mit einer Datenverarbeitungseinrichtung, wobei die von der Datenverarbeitungseinrichtung verarbeiteten Daten über die mobile Datenleitung an die Datenausgabe Einrichtung übermittelt wird. Bei den übermittelten Daten kann es sich beispielsweise um Service- und Trackingdaten handeln.

Ferner offenbart die US 2010/0077404 A1 ein System zur Kontrolle einer Vielzahl von Sensorgeräten, umfassend eine Vielzahl von Endvorrichtungen, an die jeweils die Vielzahl von Sensorgeräten angeschlossen sind, wobei jede Endvorrichtung ein IR-Steuersignal erzeugt, um ein Sensorgerät anzusteuern, dass einen sensorischen Effekt darstellt.

Des Weiteren offenbart die internationale Patentanmeldung WO 2019/103696 A1 ein Gateway-Gerät für die drahtlose Verbindung von IoT-Sensoren, -Aktoren oder -Geräten zur Aggregation der Sensor-/Aktor-/Gerätedaten zu Datenpaketen. Diese Sensorverbindungen verwenden drahtlose Kommunikation mit kurzer Reichweite (SR), beispielsweise Bluetooth, BLE, Zigbee, NFC oder ähnliche drahtlose Technologien. Die Datenpakete werden dann in bestimmten Zeitabständen über ein drahtloses Weitverkehrsnetz (LPWAN) mit geringer Leistung und großer Reichweite an eine Überwachungszentrale übertragen, die NB-IoT, Sigfox, LoRa oder ähnliche drahtlose Technologie sein umfassen. Der BLE-Standard wird modifiziert, um den Stromverbrauch des Gateways weiter zu senken. Darüber hinaus wird durch die Planung von SR und LR-Übertragungen drahtlose Interferenzen vermieden werden.

Letztlich ist aus der US 2018/0018840 A1 ein Fahrradmanagementsystem offenbart, dass eine mobile Kommunikationsvorrichtung, ein Cloud-Ende, ein Fahrrad und ein Betriebsstrategiezentrum umfasst, wobei das Fahrrad über eine montierte elektronische Vorrichtung verfügt.

Allerdings gibt es noch kein vergleichbares BUS-System für Verkehrsteilnehmer im Straßenverkehr und für im Straßenverkehr bewegte Vehikel, insbesondere für Fahrräder, oder vergleichbare, nicht motorisch oder elektromotorisch angetriebene Fortbewegungsmittel, das die Kommunikation zwischen verschiedenen Komponenten eines drahtgebundenen Netzwerkes über ein drahtloses Netzwerk hinweg mit mehreren Teilnehmern ermöglicht. Dabei können Komponenten auch öffentliche Infrastrukturen, zum Beispiel Ampeln, Verkehrsleitsysteme, aber auch private Infrastrukturen, zum Beispiel Smart-Homes, sein.

Diese Aufgabe wird durch ein BUS-System gemäß dem geltenden Anspruch 1 gelöst. Es handelt sich dabei um ein BUS-System, mit dem die Übertragung von Daten von einer Komponente in einem drahtgebundenen Netzwerk über ein drahtloses Netzwerk an wiederum eine, an ein drahtgebundenes Netzwerk angeschlossene Komponente ermöglicht wird. Vorteilhafte Ausgestaltungen der Erfindung können den anhängigen Ansprüchen entnommen werden.

Dabei sind sicherheitsrelevante Daten im System dezentral erfassbar und können über drahtgebundene Netzwerke hinweg übertragen und genutzt werden. Dies hat auch einen energetischen Effekt, dass z.B. die Daten beim Betätigen eines Bremslichts fürs Fahrrad und eines an dem Fahrrad angehängten Anhänger von nur einer Datenquelle erfasst wird, d. h. es müssen keine doppelten Sensoren im System vorhanden sein, womit der Energiebedarf des gesamten BUS-Systems insgesamt reduziert wird.

Des Weiteren können die zu übertragenden Daten in private und öffentliche Nachrichten getrennt werden. Öffentliche Nachrichten, auch bekannt als Broadcastnachrichten, sind dabei Nachrichten bzw. Daten, die jederzeit von anderen Teilnehmern ohne eine zuvor autorisierte Verbindung oder der Bedingungen, dass die Teilnehmer bzw. Komponenten oder die BUS-Systeme miteinander gekoppelt sind, empfangen werden können. Dies kann den Datenaustausch zwischen unterschiedlichen, an drahtgebundene Netzwerke angeschlossene Komponenten oder der gesamten BUS-Systeme ermöglichen, die beispielsweise das erste Mal aufeinandertreffen und dennoch Statusinformationen untereinander austauschen können.

Private Nachrichten sind dabei Nachrichten bzw. Daten, die nur innerhalb eines BUS-Systems bzw. innerhalb eines aktiv gekoppelten Verbundes übertragen werden, z.B. innerhalb der Kopplung zwischen einem BUS-System eines Fahrrads mit dem BUS-System eines an dem Fahrrad angehängten Anhängers.

Um auch private Nachrichten über drahtlose Netzwerke hinweg übertragen zu können, sieht die Erfindung vor, dass die zu übertragenden, privaten Nachrichten bzw. Daten codiert und/oder speziell signiert sind. Diese privaten, codierten bzw. speziell signierten Daten bzw. Nachrichten können somit nur von innerhalb eines aktiv gekoppelten Verbundes angeschlossenen Komponenten decodiert bzw. gelesen werden. Somit ist gewährleistet, dass private Nachrichten, welche über ein drahtloses Netzwerk hinweg übertragen werden, weder abgehört noch manipuliert werden können. Dies schützt insbesondere sicherheitsrelevante Nachrichten bzw. Daten, wie beispielsweise Daten, betreffend die Betätigung oder den Zustand der Bremse, des Antriebsstrang bzw. der Antriebsunterstützung und von weiteren sicherheitsrelevanten Komponenten vor Manipulation oder sonstigen unbefugten Eingriffen.

Um den Betriebsstatus der im BUS-System beteiligten Komponenten, insbesondere auch den Status des drahtgebundenen bzw. des drahtlosen Netzwerks als solches zu überprüfen, sieht das BUS-System eine zyklische Überprüfung, insbesondere in Form eines Heartbeat-Counters, vor. Dabei wird zyklisch überprüft ob eine erfolgreiche Übertragung stattgefunden hat. Sollten keine Daten bzw. Nachrichten zwischen den zyklischen Überprüfungen übertragen worden sein, so wird eine Kontrollnachricht geschickt, die dieselbe Funktion erfüllt. Wird daraufhin festgestellt, dass eine Komponente bzw. ein drahtgebundenes oder drahtloses Netzwerk als solches nicht mehr verfügbar ist, so wird eine Fehlermeldung an alle anderen Beteiligten bzw. vorhandenen Komponenten geschickt. Hierdurch kann beispielsweise eine Notfallstrategie implementiert werden, insbesondere kann bei sicherheitsrelevanten Komponenten, zum Beispiel beim Antrieb oder bei einer Bremse, eingegriffen werden, ohne dass eine derartige Notfallstrategie bei nicht sicherheitsrelevanten Komponenten zum Einsatz kommen muss.

Die Unterscheidung in Zustands- und Prozessdaten hat eine Priorisierung der zu übertragenden Daten zur Folge. Prozessdaten sind Daten, die zu einem festen definierten Zeitpunkt von einer Komponente zu einer anderen Komponente ankommen müssen, weshalb diese vorrangig behandelt werden müssen. Prozessdaten stellen also zeitkritische Daten dar, die insbesondere sicherheitsrelevante Komponenten regeln, z.B. den Antrieb oder die Bremse. Zustandsdaten, beispielsweise vom Scheinwerfer- oder Rücklicht, hingegen teilen lediglich den Zustand der jeweiligen Komponente mit und sind somit im Vergleich zu Prozessdaten zeitunkritisch, solange sie in einer definierten Zeitspanne, beispielsweise innerhalb von 400 ms, von einer Komponente auf die Nächste übertragen werden.

Unter dem Begriff "Echtzeit" ist der Betrieb informationstechnischer Systeme zu verstehen, die bestimmte Ergebnisse zuverlässig innerhalb einer vorbestimmten Zeitspanne, z.B. einem festen Zeitenraster, liefern können. In der DIN ISO/IEC 2382 ist der Begriff "Echtzeit" wie folgt definiert: Unter Echtzeit versteht man den Betrieb eines Rechensystems, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorherbestimmten Zeitpunkten anfallen.

In einer vorteilhaften Ausgestaltung weist das BUS-System ein Gateway, insbesondere ein Radio-Gateway, auf, welches wenigstens ein drahtgebundenes Netzwerk mit wenigstens einem drahtlosen Netzwerk verbinden kann. Damit wird ermöglicht, dass mehr als ein drahtloses Netzwerk, beispielsweise Bluetooth- und WiFi-Netze, mit einem drahtgebundenen Netzwerk verbunden werden. Dies ermöglicht die Kommunikation zwischen drahtgebundenen Netzwerken und unterschiedlichen, drahtlosen Netzwerken.

In einer weiteren vorteilhaften Ausgestaltung kann das BUS-System eine Redundanzprüfung bzw. eine Paritätsprüfung oder eine Prüfsumme durchführen, bevorzugt eine zyklische Redundanzprüfung, sodass die Integrität der Daten überprüfbar ist, insbesondere ob Fehler bei der Datenübertragung aufgetreten sind. Wird festgestellt, dass die Datenübertragung fehlerhaft gewesen ist, so kann dies dem Empfänger in einer Antwort mitgeteilt und eine erneute Übertragung initiiert werden. Somit kann gewährleistet werden, dass Fehler bei der Übertragung von Daten bzw. Nachrichten an die jeweiligen an das drahtgebundene bzw. drahtlose Netzwerk angeschlossenen Komponenten erkannt und diese nachträglich korrigierbar sind, um letztlich eine störungsfreie Übertragung gewährleisten zu können.

In einer vorteilhaften Ausgestaltung kann die Echtzeitübertragung der Prozessdaten innerhalb eines Zeitrahmens von 20 bis 150 ms, bevorzugt innerhalb einer Zeitspanne von 71 bis 142 ms bzw. 7 bis 14 Hz, erfolgen.

Um eine Übertragung mit geringen Latenzen zwischen drahtgebundenen und drahtlosen Netzwerken zu gewährleisten, können die Netzwerke teilweise oder in ihrer Gesamtheit synchronisiert werden. Dafür kann beispielsweise eine exakt definierte Zeit für die Teilnetzwerke oder für alle Netzwerke eingeführt werden. Insbesondere Prozessdaten können dadurch sehr effizient über mehrere Teilnetzwerke hinweg transportiert werden, indem die Prozessdaten phasenverschoben in drahtlose und drahtgebundene Netzwerke übertragen werden. Das ermöglicht insbesondere in drahtlosen Netzwerken Übertragungswiederholungen einzuplanen.

In abermaliger vorteilhafter Ausgestaltung kann das BUS-System am drahtlosen Netzwerk eine Energieversorgung aufweisen, mit der gleichzeitig das drahtgebundene Netzwerk mit Energie versorgbar ist. Somit benötigen weitere Bus-teilnehmer bzw. Komponenten, welche an das drahtlose Netzwerk und oder an das drahtgebundene Netzwerk angeschlossen sind, keine eigene Energieversorgung, womit das BUS-System als solches verkleinert werden kann. In einer besonders bevorzugten Ausführung kann die Energieversorgung, sowie die Datenübertragung innerhalb des drahtgebundenen Netzwerks, mittels eines Hybridkabels realisiert werden.

Da nicht jeder BUS-Teilnehmer bzw. nicht jede an das drahtgebundene und/oder drahtlose Netzwerk angeschlossene Komponente dauerhaft im Betrieb sein muss, können diese außerhalb des Regelbetriebs in einen Energiesparmodus bzw. Schlafmodus übergehen, wobei ein Teil des BUS-Teilnehmers weiterhin aktiv bleibt, insbesondere der empfangende Teil, sodass eine Reaktivierung des BUS-Teilnehmers weiterhin ermöglicht ist. Dadurch wird die Leistungsaufnahme eines BUS-Teilnehmers erheblich reduziert, da die funktionellen Komponenten innerhalb des an das drahtgebundene und/oder drahtlose Netzwerk angeschlossenen Komponenten vollständig deaktiviert werden können. Auch kann das drahtgebundene bzw. das drahtlose Netzwerk einen solchen Energiesparmodus bzw. Schlafmodus aufweisen, sodass auch hierdurch der Energieverbrauch des BUS-Systems weiter reduziert werden kann.

In einer bevorzugten Ausgestaltung kann jede an einem drahtgebundenen oder drahtlosen Netzwerk angeschlossene Komponente, sowie jedes drahtlose und jedes drahtgebundene Netzwerk selbst innerhalb des Bussystems seine Einsatzbereitschaft melden. Mit diesen Einsatzbereitschaftsmeldungen kann eine Integrität, beispielsweise eine Hash- bzw. eine Prüfsumme, hergestellt werden, welche unter den Teilnehmern ausgetauscht und mit den hinterlegten Daten des jeweiligen Teilnehmers verglichen werden können. Sollten Abweichungen auftreten, so kann entweder die gesamte Konfiguration oder nur die festgestellten, vorhandenen Änderungen jeweils abgefragt werden. Dies ist insbesondere dann von Vorteil, wenn das BUS-System neu gestartet werden muss, beispielsweise aufgrund einer leeren Energieversorgung, da nicht jeder einzelne Teilnehmer einzeln abgefragt werden muss, da dies gerade über Funknetze hinweg meist mit einer intensiven Kommunikation und mit einem entsprechenden hohen Zeit- und Energiebedarf verbunden ist. Somit kann eine schnelle Einsatzbereitschaft der einzelnen Teilnehmer bzw. der an das drahtgebundene und/oder drahtlose Netzwerk angeschlossenen Komponenten, z.B. der Wechsel von einem Anhänger von einem Fahrrad auf ein weiteres Fahrrad, gewährleistet werden.

Zur Datenerfassung kann ein Sensor an eine, an das drahtgebundene Netzwerk und/oder drahtlose Netzwerk, angeschlossene Komponente oder direkt an das drahtgebundene Netzwerk und/oder drahtlose Netzwerk angeschlossen sein. Bei diesem Sensor handelt es sich beispielsweise um einen Lichtsensor, der bei eintretender Dämmerung die Änderung der Lichtverhältnisse in Form einer Nachricht an eine Komponente des BUS-Systems oder an das BUS-System selbst übertragen kann. Die übertragenen Daten können hierbei bereits vor ausgewertet werden, sodass nur relevante Änderungen an weitere Teilnehmer übertragen werden. Somit werden unnötige Datenübertragungen und der damit einhergehende Energiebedarf reduziert. Bevorzugt kann anschließend durch eine Routingfunktion innerhalb eines Gateways die bereits vorgefilterte Nachricht an die Beteiligten bzw. an die Komponenten, für die die Information bzw. Nachricht relevant ist, gezielt übertragen werden. Dabei ermittelt eine Routingfunktion die jeweils in Sachen Energiebedarf optimale Route zur Übertragung der Nachricht, um unnötige Übertragungen innerhalb des BUS-Systems zu reduzieren. Dies führt im Endergebnis ebenfalls zu einer Reduzierung des Energiebedarfs.

In einer weiteren vorteilhaften Ausgestaltung kann das BUS-System einen Aktuator aufweisen, welcher an einer an das drahtgebundene Netzwerk und/oder an das drahtlose Netzwerk angeschlossene Komponente oder direkt an das drahtgebundene Netzwerk und/oder drahtlose Netzwerk angeschlossen sein kann. Bei solch einem Aktuator kann es sich beispielsweise um einen Aktuator handeln, mit dem insbesondere der Seitenständer eines Fahrrads, der wiederum mit dem drahtgebundenen Netzwerk des BUS-Systems verbunden sein kann, ausklappbar ist. Dabei ist denkbar, dass der Aktuator über einen separaten Befehl, insbesondere durch ein Betätigen eines am Lenkrad eines Fahrrads befestigten Druckknopfs, aktiviert und somit der Seitenständer ausgeklappt werden kann.

In einer weiteren vorteilhaften Ausgestaltung können dem BUS-System die Komponenten über eine standardisierte "Plug'n'Play"-Funktion hinzugefügt werden. Eine explizite Einrichtung der Komponenten am BUS-System ist nicht notwendig. Die Komponenten sind allein durch die Verbindung ins drahtlose und/oder drahtgebundene Netzwerk mit ihren hinterlegten Funktionsbeschreibung und dazugehörigen Standardeinstellungen direkt betriebsbereit.

Damit ein drahtloses Netzwerk mit weiteren drahtlosen Netzwerken einfach gekoppelt werde kann, kann das drahtlose Netzwerk einen Taster aufweisen, mit dem das drahtlose Netzwerk mit weiteren, drahtlosen Netzwerken bzw. Komponenten durch Betätigung des Tasters koppel- oder entkoppelbar ist. Dies ermöglicht eine schnelle Verbindung bzw. Trennung von weiteren Teilnehmern bzw. weiteren Netzwerken mit einem bereits vorhandenen Netzwerk.

Somit kann beispielsweise ein Teilnetzwerk C inklusive dessen Teilnehmern C₁-Cₓ und abhängigen Teilnetzwerke D|E von einen Teilnetzwerk A auf ein anderes Teilnetzwerk B umgehängt werden, ohne die Abhängigkeit der Teilnehmer C₁-Cₓ und die Abhängigkeit der Teilnetzwerke D|E zu verlieren. Insbesondere kann ein Anhänger (Teilnetzwerk C) mit mehreren gekoppelten Komponenten (C₁-Cₓ) und/oder Wearables (Teilnetzwerk D|E) mit unterschiedlichen Fahrrädern (Teilnetzwerk A|B) schnell gekoppelt bzw. entkoppelt werden. Damit kann eine flexible Gestaltung von Topologien unabhängig der Art der Datenübertragung über ein drahtloses oder drahtgebundenes Netzwerk ermöglicht werden.

In einer vorteilhaften Ausgestaltung kann das drahtgebundene Netzwerk ein Datenbus, insbesondere ein CAN-BUS, RS484, Ethernet, 1-Wired, SPI oder 12C und das drahtlose Netzwerk ein Funknetzwerk, insbesondere WiFi, Blue tooth, Zigbee oder LoraWan, sein.

Das BUS-System kann eine elektrische Spannung von 5 bis 12 Volt und/oder von 24 bis 48 Volt aufweisen. Damit kann das BUS-System mit gängigen Akkumulatoren bzw. Bordnetzen betrieben werden.

Vorteilhaft wird das BUS-System in per Muskelkraft betriebenen Fahrrädern, in elektrisch betriebenen Fahrrädern oder in Fahrradanhängern, sowie E-Rollern verwendet. Auch kann das BUS-System in Wearables, insbesondere in Westen, Handschuhen oder Rucksäcken Anwendung finden.

Die Erfindung wird nachstehend anhand von drei Ausführungsbeispielen näher erläutert.

Es zeigt:
- Fig. 1: die Kommunikation von drahtgebundenen Netzwerken über drahtlose Netzwerke hinweg in einer schematischen Darstellung eines ersten Ausführungsbeispiels,
- Fig. 2: die Kommunikation durch Trennung in private und öffentliche Nachrichten innerhalb verschiedener BUS-Systeme in einer schematischen Darstellung eines zweiten Ausführungsbeispiels, sowie
- Fig. 3: die Übertragung von Daten eines Sensors innerhalb eines BUS-Systems in einer schematischen Darstellung eines dritten Ausführungsbeispiels.

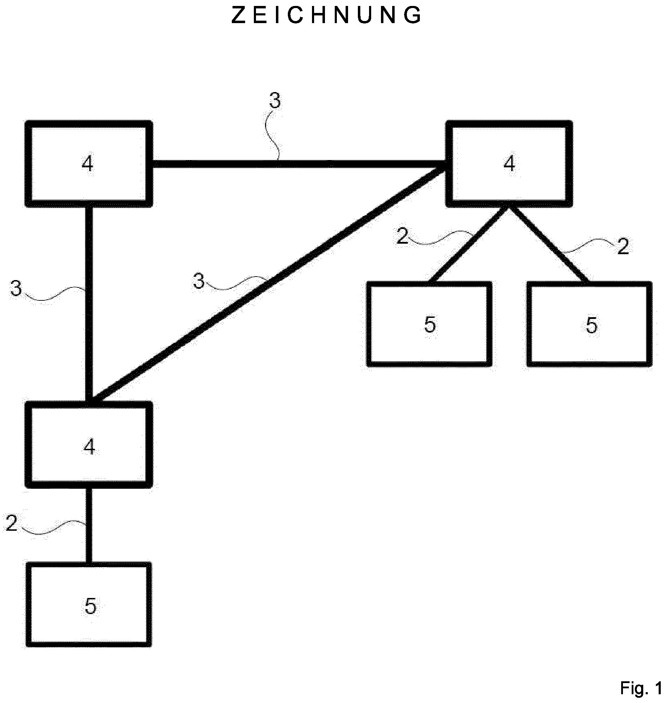

Figur 1 zeigt ein erstes Ausführungsbeispiel eines BUS-Systems 1, bei der die Kommunikation von drahtgebundenen Netzwerken 2 über drahtlose Netzwerke 3 hinweg in einer schematischen Darstellung stattfindet. Dabei sind die drahtgebundenen Netzwerke 2 über ein Radio-Gateway 4 mit den drahtlosen Netzwerken 3 verbunden. Dies ermöglicht, dass Daten einer Komponente 5, über die an den drahtgebundenen Netzwerken 2 gekoppelten Radio-Gateways über die drahtlosen Netzwerke 3 hinweg, an weitere, die ebenfalls über ein an das drahtgebundene Netzwerk 2 angeschlossenes drahtloses Netzwerk und an das drahtgebundene Netzwerk gekoppelte Komponenten 5 aufweist, übertragen werden können.

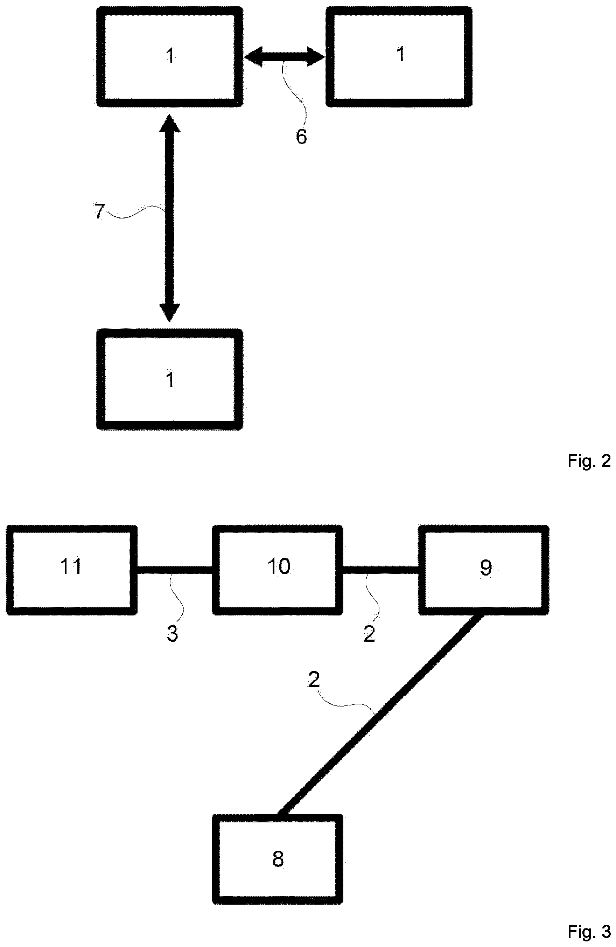

Figur 2 zeigt in einem zweiten Ausführungsbeispiel die Kommunikation durch Trennung in private und öffentliche Nachrichten 6 und 7, innerhalb verschiedener BUS-Systeme 1. Dabei findet meist die Übertragung öffentlicher Nachrichten 7 bzw. öffentlicher Daten über das innerhalb des BUS-Systems 1 vorhandene drahtlose Netzwerk 3 statt, wobei Daten, die innerhalb des drahtgebundene Netzwerkes 2 übertragen werden, von Natur aus private Nachrichten 6 sind.

Daten bzw. Nachrichten, die über drahtlose Netzwerke 3 hinweg gesendet werden, können generell von anderen Teilnehmern, die ebenfalls Zugriff auf dieses drahtlose Netzwerk 3 haben, empfangen werden, sodass Daten die von einem drahtlosen Netzwerk 3 versendet werden, generell öffentliche Nachrichten 7 darstellen. Um auch private Nachrichten bzw. Daten die über drahtlose Netzwerke hinweg versenden zu können, können diese codiert bzw. signiert sein, sodass ohne Vorhandensein eines entsprechenden Decodierungs-Codes bzw. der Möglichkeit des Auslesens der speziellen Signierung, Einlesen bzw. Entschlüsseln einer über ein drahtloses Netzwerk hinweg, versendenden privaten Nachricht nicht möglich ist.

Figur 3 zeigt in einem dritten Ausführungsbeispiel die Übertragung von Daten eines Sensors 8 innerhalb eines BUS-Systems 1. Das BUS-System 1 umfasst dabei einen Lichtsensor 8, der über ein drahtgebundenes Netzwerk 2 mit einem Frontlicht 9 eines Fahrrads verbunden ist. Ändern sich die Lichtverhältnisse in der Umgebung, so können die vom Lichtsensor 8 erfassten Daten über das drahtgebundene Netzwerk 2 an das Frontlicht 9 und an das Rücklicht 10 des Fahrrads übertragen werden.

Auch können die so über das drahtgebundene Netzwerk 2 gesendeten Daten über ein an das drahtgebundene Netzwerk 2 angeschlossenes, drahtloses Netzwerk 3 an das Rücklicht eines an dieses Fahrrad angekoppelten Fahrradanhängers übertragen werden.

Somit kann sichergestellt werden, dass wenn sich die Umgebung derart verändert, dass es notwendig wird, die Beleuchtung, also das Frontlicht 9 und das Rücklicht 10 des Fahrrads sowie das Rücklicht 11 des an das Fahrrad an gekoppelten Fahrradanhängers, einzuschalten, dies durch die vom Lichtsensor 8 erfassten und über das drahtgebundene Netzwerk 2, sowie über das drahtlose Netzwerk 3 hinweg, versendenden Daten ermöglicht wird.

Somit ist vorstehend ein BUS-System für Verkehrsteilnehmer im Straßenverkehr und für im Straßenverkehr bewegte Vehikel, insbesondere für Fahrräder, offenbart, welches die Kommunikation zwischen verschiedenen Komponenten eines drahtgebundenen Netzwerkes über ein drahtloses Netzwerk hinweg mit mehreren Teilnehmern ermöglicht.

### BEZUGSZEICHENLISTE

- 1: BUS-System
- 2: Drahtgebundenes Netzwerk
- 3: Drahtloses Netzwerk
- 4: Radio Gateway
- 5: Komponente
- 6: Private Nachrichten
- 7: Öffentliche Nachrichten
- 8: Lichtsensor
- 9: Frontlicht
- 10: Fahrradrücklicht
- 11: Anhängerrücklicht

## Patentansprüche

1. BUS-System (1) für Straßenverkehrsteilnehmer und im Straßenverkehr bewegte Vehikel, insbesondere für Fahrräder, umfassend ein drahtgebundenes Netzwerk (2) sowie ein mit dem drahtgebundenen Netzwerk (2) verbundenes, drahtloses Netzwerk (3), wobei Daten von wenigstens einer an dem drahtgebundenen (2) und/oder drahtlosen Netzwerk (3) angeschlossenen Komponente (5,9,10,11) durch das mit dem drahtgebundenen Netzwerk (2) verbundene, drahtlose Netzwerk (3) an wenigstens eine weitere Komponente (5,9,10,11) eines weiteren, drahtgebundenen (2) und/oder drahtlosen Netzwerks (3) über das wenigstens eine weitere drahtlose Netzwerk (3) übertragbar sind,
**dadurch gekennzeichnet, dass** die zu übertragenden Daten in Prozess- und Zustandsdaten unterteilt sind, wobei Prozessdaten zeitkritische Daten sind, welche zu einem festdefinierten Zeitpunkt von einer Komponente (5,9,10,11) zu einer anderen Komponente (5,9,10,11) übertragen werden, und Zustandsdaten zeitunkritische Daten sind, welche in einer definierten Zeitspanne von einer Komponente (5,9,10,11) zu einer anderen Komponente (5,9,10,11) übertragen werden.

2. BUS-System gemäß Anspruch 1, **dadurch gekennzeichnet, dass** wenigstens ein drahtgebundenes Netzwerk (2) mit wenigstens einem drahtlosen Netzwerk (3) über ein Gateway (4) miteinander verbunden ist.

3. BUS-System gemäß Anspruch 1 oder 2, **dadurch gekennzeichnet, dass** bei den zu übertragenden Daten zwischen privaten (6) und öffentlichen Nachrichten (7) unterschieden wird, mithin diese Daten separat, vorzugsweise auf unterschiedlichen Kanälen, übertragbar sind.

4. BUS-System gemäß Anspruch 3, **dadurch gekennzeichnet, dass** die privaten Nachrichten (6) codiert und/oder speziell signiert sind.

5. BUS-System gemäß einem der vorhergehenden Ansprüche, **dadurch gekennzeichnet, dass** dieses eine Redundanzprüfung durchführt, bevorzugt eine zyklische Redundanzprüfung, so dass die Integrität der Daten überprüfbar ist, insbesondere auf Fehler bei der Datenübertragung.

6. BUS-System gemäß einem der vorhergehenden Ansprüche, **dadurch gekennzeichnet, dass** die zu übertragenden Daten synchronisierbar sind.

7. BUS-System gemäß einem der vorhergehenden Ansprüche, **dadurch gekennzeichnet, dass** das drahtlose Netzwerk (3) mit einer Energieversorgung verbunden ist, mittels derer gleichzeitig das drahtgebundene Netzwerk (2) mit Energie versorgbar ist.

8. BUS-System gemäß Anspruch 7, **dadurch gekennzeichnet, dass** das drahtgebundene Netzwerk (2) ein Hybridkabel aufweist, so dass die Energie- als auch die Datenübertragung über dieses Hybridkabel stattfindet.

9. BUS-System gemäß einem der vorhergehenden Ansprüche, **dadurch gekennzeichnet, dass** wenigstens eine, an einem drahtgebundenen Netzwerk (2) angeschlossene Komponente (5,9,10,11) einen Energiesparmodus aufweist.

10. BUS-System gemäß einem der vorhergehenden Ansprüche, **dadurch gekennzeichnet, dass** das drahtgebundene Netzwerk (2) und/oder das drahtlose Netzwerk (3) einen Energiesparmodus aufweist.

11. BUS-System gemäß einem der vorhergehenden Ansprüche, **dadurch gekennzeichnet, dass** jede, mit einem drahtgebundenen Netzwerk (2) oder drahtlosen Netzwerk (3) verbundene Komponente (5,9,10,11), jedes drahtlose Netzwerk (2) und jedes drahtgebundene Netzwerk (3) seine Einsatzbereitschaft innerhalb des BUS-Systems (1) meldet, so dass eine Integrität herstellbar, unter den Teilnehmern austauschbar und mit den hinterlegten Daten vergleichbar ist, wobei bei Abweichungen jeweils die Konfiguration oder bei vorhandenen Änderungen diese Änderungen jeweils abfragbar sind.

12. BUS-System gemäß einem der vorhergehenden Ansprüche, **dadurch gekennzeichnet, dass** an eine, an das drahtgebundene Netzwerk (2) und/oder drahtlose Netzwerk (3) angeschlossene Komponente (5,9,10,11) oder direkt an das drahtgebundene Netzwerk (2) und/oder drahtloses Netzwerk (3) wenigstens ein Sensor (8) angeschlossen ist.

13. BUS-System gemäß einem der vorhergehenden Ansprüche, **dadurch gekennzeichnet, dass** an eine, an das drahtgebundene Netzwerk (2) und/oder drahtlose Netzwerk (3) angeschlossene Komponente (5,9,10,11) oder direkt an das drahtgebundene Netzwerk (2) und/oder drahtlose Netzwerk (3) wenigstens ein Aktuator angeschlossen ist.

14. BUS-System gemäß Anspruch 12, **dadurch gekennzeichnet, dass** dieses einen Filter bzw. einen Plausibilitätstest aufweist, mit dem die von einem Sensor (8) übertragenen Daten auf relevante Änderungen hin überprüfbar sind.

15. BUS-System gemäß einem der vorhergehenden Ansprüche, **dadurch gekennzeichnet, dass** das Gateway (4) eine Routingfunktion aufweist.

16. BUS-System gemäß einem der vorhergehenden Ansprüche, **dadurch gekennzeichnet, dass** das drahtlose Netzwerk (3) einen Taster aufweist, mit dem das drahtlose Netzwerk (3) mit weiteren, drahtlosen Netzwerken koppelbar oder entkoppelbar ist.

17. BUS-System gemäß einem der vorhergehenden Ansprüche, **dadurch gekennzeichnet, dass** das drahtgebundene Netzwerk (2) ein Datenbus ist, insbesondere ein CAN-BUS, RS485, Ethernet, 1-Wired, SPI oder I2C, Parallelbus

18. BUS-System gemäß einem der vorhergehenden Ansprüche, **dadurch gekennzeichnet, dass** das drahtlose Netzwerk (3) ein Funknetzwerk ist, insbesondere WiFi, Bluetooth, IEEE 802.15.4 (Zigbee, Thread...) oder LoraWan.

19. BUS-System gemäß einem der vorhergehenden Ansprüche, **dadurch gekennzeichnet, dass** dieses eine elektrische Spannung von 5 bis 12 Volt und/oder eine Spannung von 24 bis 48 Volt aufweist.

20. Verwendung eines BUS-Systems nach einem der vorhergehenden Ansprüche bei einem per Muskelkraft betriebenen Fahrrads, einem elektrisch betriebenen Fahrrad oder bei einem Fahrradanhänger.

21. Verwendung eines BUS-Systems nach einem der vorhergehenden Ansprüche 1 bis 19 bei einem E-Roller.

22. Verwendung eines BUS-Systems nach einem der vorhergehenden Ansprüche 1 bis 19 bei Wearables, insbesondere bei Westen, Handschuhen oder Rücksäcken.

## Claims

1. BUS system (1) for road users and vehicles moving in road traffic, in particular for bicycles, comprising a wired network (2) and a wireless network (3) connected to the wired network (2), with data from at least one component (5,9,10,11) connected to the wired network (2) and/or wireless network (3) being transmittable by the wireless network (3) connected to the wired network (2) to at least one further component (5,9,10,11) of a further wired network (2) and/or wireless network (3) via the at least one further wireless network (3),
**characterized in that** the data to be transmitted are divided into process and status data, with process data being time-critical data which are transmitted from one component (5,9,10,11) to another component (5,9,10,11) at a fixed point in time, and with status data being time-non-critical data which are transmitted from one component (5,9,10,11) to another component (5,9,10,11) in a defined period of time.

2. BUS system according to claim 1, **characterized in that** at least one wired network (2) is connected to at least one wireless network (3) via a gateway (4).

3. BUS system according to claim 1 or 2, **characterized in that** a distinction is made between private (6) and public messages (7) in the data to be transmitted, so that these data can be transmitted separately, preferably on different channels.

4. BUS system according to claim 3, **characterized in that** the private messages (6) are encrypted and/or specially signed.

5. BUS system according to any of the preceding claims,
**characterized in that** said BUS system performs a redundancy check, preferably a cyclic redundancy check, so that the integrity of the data can be checked, in particular for errors during data transmission.

6. BUS system according to any of the preceding claims,
**characterized in that** the data to be transmitted can be synchronized.

7. BUS system according to any of the preceding claims,
**characterized in that** the wireless network (3) is connected to a power supply by means of which the wired network (2) can be supplied with power at the same time.

8. BUS system according to claim 7, **characterized in that** the wired network (2) has a hybrid cable, so that both the power transmission and the data transmission takes place via this hybrid cable.

9. BUS system according to any of the preceding claims,
**characterized in that** at least one component (5, 9, 10, 11) connected to a wired network (2) has a power-saving mode.

10. BUS system according to any of the preceding claims,
**characterized in that** the wired network (2) and/or the wireless network (3) has a power-saving mode.

11. BUS system according to any of the preceding claims,
**characterized in that** each component (5, 9, 10, 11) connected to a wired network (2) or wireless network (3), each wireless network (2) and each wired network (3) reports its readiness for use within the BUS system (1), so that integrity can be established, exchanged between the participants and compared with the stored data, in the event of deviations the configuration or, in the event of existing changes, these changes being able to be queried.

12. BUS system according to any of the preceding claims,
**characterized in that** at least one sensor (8) is connected to a component (5, 9, 10, 11) connected to the wired network (2) and/or wireless network (3) or directly to the wired network (2) and/or wireless network (3).

13. BUS system according to any of the preceding claims,
**characterized in that** at least one actuator is connected to a component (5, 9, 10, 11) connected to the wired network (2) and/or wireless network (3) or directly to the wired network (2) and/or wireless network (3).

14. BUS system according to claim 12, **characterized in that** said BUS system has a filter or a plausibility test with which the data transmitted by a sensor (8) can be checked for relevant changes.

15. BUS system according to any of the preceding claims,
**characterized in that** the gateway (4) has a routing function.

16. BUS system according to any of the preceding claims,
**characterized in that** the wireless network (3) has a button with which the wireless network (3) can be coupled to or uncoupled from other wireless networks.

17. BUS system according to any of the preceding claims,
**characterized in that** the wired network (2) is a data bus, in particular a CAN-BUS, RS485, Ethernet, 1-Wired, SPI or I2C, parallel bus

18. BUS system according to any of the preceding claims,
**characterized in that** the wireless network (3) is a radio network, in particular WiFi, Bluetooth, IEEE 802.15.4 (Zigbee, Thread...) or LoraWan.

19. BUS system according to any of the preceding claims,
**characterized in that** said BUS system has an electrical voltage of 5 to 12 volts and/or a voltage of 24 to 48 volts.

20. Use of a BUS system according to any of the preceding claims in a human-powered bicycle, an electrically powered bicycle or a bicycle trailer.

21. Use of a BUS system according to any of the preceding claims 1 to 19 in an e-scooter.

22. Use of a BUS system according to any of the preceding claims 1 to 19 in wearables, in particular in vests, gloves or backpacks.

## Revendications

1. Système de bus (1) pour des usagers du trafic routier et des véhicules se déplaçant dans le trafic routier, en particulier des bicyclettes, comprenant un réseau filaire (2) ainsi qu'un réseau sans fil (3) connecté au réseau filaire (2), dans lequel des données d'au moins un composant (5, 9, 10, 11) connecté au réseau filaire (2) et/ou sans fil (3) peuvent être transmises par le réseau sans fil (3) connecté au réseau filaire (2) à au moins un autre composant (5, 9, 10, 11) d'un autre réseau filaire (2) et/ou sans fil (3) par l'intermédiaire de l'au moins un autre réseau sans fil (3),
**caractérisé en ce que** les données à transmettre sont divisées en données de processus et en données d'état, dans lequel les données de processus sont des données urgentes qui sont transmises d'un composant (5, 9, 10, 11) à un autre composant (5, 9, 10, 11) à un moment défini de manière fixe, et les données d'état sont des données non urgentes qui sont transmises d'un composant (5, 9, 10, 11) à un autre composant (5, 9, 10, 11) dans un intervalle de temps défini.

2. Système de bus selon la revendication 1, **caractérisé en ce qu'**au moins un réseau filaire (2) est connecté à au moins un réseau sans fil (3) par l'intermédiaire d'une passerelle (4).

3. Système de bus selon la revendication 1 ou 2, **caractérisé en ce que** , pour les données à transmettre, une distinction est faite entre messages privés (6) et messages publics (7), c'est-à-dire que lesdites données peuvent être transmises séparément, de préférence sur des canaux différents.

4. Système de bus selon la revendication 3, **caractérisé en ce que** les messages privés (6) sont codés et/ou spécialement signés.

5. Système de bus selon l'une des revendications précédentes,
**caractérisé en ce que** celui-ci exécute un contrôle de redondance, de préférence un contrôle de redondance cyclique, de sorte que l'intégrité des données peut être vérifiée, en particulier en ce qui concerne des erreurs lors de la transmission de données.

6. Système de bus selon l'une des revendications précédentes,
**caractérisé en ce que** les données à transmettre peuvent être synchronisées.

7. Système de bus selon l'une des revendications précédentes,
**caractérisé en ce que** le réseau sans fil (3) est connecté à une alimentation en énergie au moyen de laquelle le réseau filaire (2) peut être alimenté simultanément en énergie.

8. Système de bus selon la revendication 7, **caractérisé en ce que** le réseau filaire (2) présente un câble hybride, de sorte que la transmission d'énergie ainsi que la transmission de données ont lieu par l'intermédiaire dudit câble hybride.

9. Système de bus selon l'une des revendications précédentes,
**caractérisé en ce qu'**au moins un composant (5, 9, 10, 11) connecté à un réseau filaire (2) présente un mode économie d'énergie.

10. Système de bus selon l'une des revendications précédentes,
**caractérisé en ce que** le réseau filaire (2) et/ou le réseau sans fil (3) présentent un mode économie d'énergie.

11. Système de bus selon l'une des revendications précédentes,
**caractérisé en ce que** chaque composant (5, 9, 10, 11) connecté à un réseau filaire (2) ou à un réseau sans fil (3), chaque réseau sans fil (2) et chaque réseau filaire (3) signale sa disponibilité d'utilisation à l'intérieur du système de bus (1), de sorte qu'une intégrité peut être établie, échangée entre les usagers et comparée aux données enregistrées, dans lequel respectivement la configuration, en cas de divergences, ou, en cas de modifications existantes, lesdites modifications peuvent être interrogées.

12. Système de bus selon l'une des revendications précédentes,
**caractérisé en ce qu'**au moins un capteur (8) est connecté à un composant (5, 9, 10, 11) connecté au réseau filaire (2) et/ou au réseau sans fil (3), ou directement au réseau filaire (2) et/ou au réseau sans fil (3).

13. Système de bus selon l'une des revendications précédentes,
**caractérisé en ce qu'**au moins un actionneur est connecté à un composant (5, 9, 10, 11) connecté au réseau filaire (2) et/ou au réseau sans fil (3), ou directement au réseau filaire (2) et/ou au réseau sans fil (3).

14. Système de bus selon la revendication 12, **caractérisé en ce que** celui-ci présente un filtre ou un test de plausibilité avec lesquels les données transmises par le capteur (8) peuvent être vérifiées en ce qui concerne des modifications pertinentes.

15. Système de bus selon l'une des revendications précédentes,
**caractérisé en ce que** la passerelle (4) présente une fonction de routage.

16. Système de bus selon l'une des revendications précédentes,
**caractérisé en ce que** le réseau sans fil (3) présente un bouton-poussoir avec lequel le réseau sans fil (3) peut être couplé à d'autres réseaux sans fil ou désaccouplé de ceux-ci.

17. Système de bus selon l'une des revendications précédentes,
**caractérisé en ce que** le réseau filaire (2) est un bus de données, en particulier un bus CAN, RS485, Ethernet, à 1 fil, SPI ou I2C, bus parallèle

18. Système de bus selon l'une des revendications précédentes,
**caractérisé en ce que** le réseau sans fil (3) est un réseau radio, en particulier WiFi, Bluetooth, IEEE 802.15.4 (Zigbee, Thread...) ou LoraWan.

19. Système de bus selon l'une des revendications précédentes,
**caractérisé en ce que** celui-ci présente une tension électrique allant de 5 à 12 volts et/ou une tension allant de 24 à 48 volts.

20. Utilisation d'un système de bus selon l'une des revendications précédentes pour une bicyclette à propulsion musculaire, une bicyclette à propulsion électrique ou une remorque pour bicyclette.

21. Utilisation d'un système de bus selon l'une des revendications précédentes 1 à 19 pour une trottinette électrique.

22. Utilisation d'un système de bus selon l'une des revendications précédentes 1 à 19 pour des objets personnels connectés, en particulier pour des vestes, des gants ou des sacs à dos.
